# EUROPEAN PATENT APPLICATION

(11) **EP 3 413 228 A1**
(43) Date of publication of application: **12.12.2018**
(21) Application number: 17174591.2
(22) Date of filing: 06.06.2017
(51) Int. Cl.: G06F 21/55, G06F 21/56

(54) **COLLECTING DEVICE, MOBILE DEVICE PROGRAM PRODUCT, AND METHOD FOR A SECURITY ANALYSIS OF A COMPUTING SYSTEM**

(71) Applicant: PwC Enterprise Advisory cvba, 1932 Sint-Stevens-Woluwe (BE)
(72) Inventor: Rallo, Vito, 1932 Sint-Stevens-Woluwe (BE)
(74) Representative: Brantsandpatents bvba

(57) **Abstract**

The current invention concerns a collecting device for gathering security analysis data from a computing system. The collecting device comprises a communication means for transmitting said security analysis data to a mobile device. In further aspects, the current invention concerns a mobile device program product for processing the security analysis data and presenting related information on a display of the mobile device, and a method for performing a security analysis of the computing system.

## Description

### Technical field

The current invention concerns a collecting device for gathering security analysis data from a computing system. The collecting device comprises a communication means for transmitting said security analysis data to a mobile device. In further aspects, the current invention concerns a mobile device program product for processing the security analysis data and presenting related information on a display of the mobile device, and a method for performing a security analysis of the computing system.

### Background

Computer security is the protection of computer systems from the theft or damage to the software or information on them, as well as from disruption or misdirection of the services they provide. Harm may come from various sources such as, for example, unintended misuse, backdoor methods, viruses, worms, trojan horses, keyloggers, and covert listening devices.

Computer security analysis may be performed by executing software or by human intervention. The former most often requires the installation of security analysis software on the computing system to be analyzed, and requires connectivity of the computing system to an external service for obtaining information regarding newly discovered threats. However, if the computing system is not by itself enabled to obtain information regarding newly discovered threats, or if installation of security analysis software on the computing system is not possible, analysis cannot be adequately performed. Human intervention, on the other hand, requires specialist training and can therefore be very costly.

US 2012/0324067 discloses a managed Universal Serial Bus (USB) service capability configured to use a mobile computing device (e.g., a smartphone or other suitable mobile computing device) to support a set of services for a computer (e.g., a desktop, a laptop, and the like) capable of connecting to the mobile computing device via a USB connection. The managed USB service capability enables local and/or remote control of the mobile computing device to operate in various USB device classes, such that the mobile computing device can provide various managed USB services for the computer via the peripheral connection. In this manner, the mobile computing device may be dynamically configured to operate as one or more of a network interface, a virtual private network (VPN) client, a smart card, a serial console, a mass-storage device, a booting device, and the like.

US 2012/0324067 does not disclose the use of the USB service capability for security analysis. However, if USB service capability would be used for this end, security analysis software would run from the mobile computing device. The latter can therefore not be disconnected or removed during collection of security analysis data from the user computing system. The mobile computing device can then also not be used to full capacity, as part of its resources are reserved for the security analysis software.

US 2014/0115487 discloses an intermediary interface system for remote servicing of a computer in a local customer system by a remote representative system even if the local customer system does not have a network connection to the remote representative system. The intermediary interface system includes a smartphone and a dongle. The dongle interfaces video output and keyboard and mouse inputs of the local customer system with the smartphone. The smartphone wirelessly interfaces the dongle with the remote representative system. Thus, the representative system displays the video signal from the local customer system for analysis and sends keyboard and mouse signals to the local customer system in response without requiring a network connection between the local customer system and the remote representative system.

The method disclosed in US 2014/0115487 relies on the intermediary interface system to service the local customer system via the remote representative system. The transmission of a large amount of data to and/or from the remote representative system, may render the analysis or service slow, costly, or even impossible to perform. In addition, as the connection relies on the smartphone which wirelessly interfaces the dongle with the remote representative system, the smartphone cannot be disconnected or removed during analysis or servicing. The smartphone can then also not be used to full capacity, as part of its resources are reserved for the wireless interface between the dongle and the remote representative system.

The present invention aims to resolve at least some of the problems mentioned above.

### Summary of the invention

In a first aspect, the present invention provides a collecting device for a security analysis of a computing system, as disclosed in claim 1.

In a second aspect, the present invention provides a mobile device program product for a security analysis of a computing system, as disclosed in claim 7.

In a third aspect, the present invention provides a method for a security analysis of a computing system, as disclosed in claim 11.

The present invention is advantageous for several reasons. The collecting device comprises computer executable instructions for generating security analysis data about the computing system and also gathers this data. During this operation, the mobile device does not need to be present near the collecting device or computing system. During this operation, the mobile device should also not be in communication with the collecting device. Resources of the mobile device such as processor time or memory are not used during this operation. The mobile device can be carried away to another location and can, without restriction of the mentioned resources, be used for other functionalities such as searching for information on the internet or making a phone call, for example. Only when the gathered data is transmitted from the collecting device to the mobile device for processing, the mobile device should be in communication with the collecting device to enable the transmission. Subsequently, during processing of the security analysis data resulting in the first diagnosis, the mobile device can again be distanced from the collecting device or computing system.

In the detailed description, the present invention is explained in greater detail. In addition, several preferred embodiments and several related advantages are discussed.

### Description of figures

**Figure 1** shows a schematic overview of devices and communication channels which can be used in a preferred embodiment of the present invention.
**Figure 2** shows a block diagram of a preferred embodiment of the method of the present invention.

### Detailed description of the invention

The present invention concerns a collecting device, a mobile device program product, and a method for a security analysis of a computing system. These three aspects are summarized in the respective section above. In this section, the present invention is explained in greater detail and preferred embodiments and several related advantages are discussed.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

"Communication" as used herein comprises any analog or digital data communication between computing devices. Communication can be wired or wireless. Communication is not limited by the used protocol. A non-limiting list of examples of communication technologies comprises 2G, 3G, 3G+, 3GPP, 4G, 4G+, 5G, 6LowPAN, Bluetooth, Bluetooth 4.0, Bluetooth 4.1, Bluetooth 4.2, Bluetooth 5, Bluetooth Low-Energy, CDMA, CDMA2000, Cellular, Dash7, EDGE, EDGE Evolution, Ethernet, EV-DO, Flash-OFDM, GPRS, GSM, HIPERMAN, HSPA, iBurst, IEEE 802.11 a, IEEE 802.11ac, IEEE 802.11b, IEEE 802.11 g, IEEE 802.11 n, IEEE 802.15.4, IEEE 802.15.4-2006, IEEE 802.16, IEEE 802.16-2009, IEEE 802.16m, IEEE 802.20, Internet, I Pv4, I Pv6, LAN, LoRaWAN, Low Rate WPAN, LTE, NarrowBand-IoT, Near Field Communication, Neul, RFID, RTT, Sigfox, Thread, UMTS, UMTS W-CDMA, UMTS-TDD, USB, UWB, WAN, Weightless, Wi-Fi, WiMAX, Wireless USB, WLAN, WWAN, ZigBee, and Z-Wave.

The abbreviation "USB" as used herein refers to Universal Serial Bus, an industry standard for connection, communication, and power supply between computers and electronic devices. The standard defines interrelated USB ports and USB connectors. A non-limiting list of examples of USB standards comprises the USB 2.0, USB 3.0, and USB 3.1 standards. A non-limiting list of examples of USB formats comprises the standard, mini, and micro formats.

"Bluetooth" as used herein refers to a wireless technology standard for exchanging data over short distances. Bluetooth may or may not require the pairing of devices before communication can be established between the devices. Insofar pairing is required in a particular Bluetooth standard used in a particular embodiment of the present invention, it is implicitly assumed that such pairing is performed between the devices to enable the communication.

"Wi-Fi" as used herein refers to any wireless local area network product based on the Institute of Electrical and Electronics Engineers' 802.11 standards. Wi-Fi can be used to establish connection of a device with the internet, a local area network such as a campus-wide network, or with another device.

"Wireless mobile telecommunications technology" as used herein refers to any communication standard for establishing mobile internet access. Examples of wireless mobile telecommunications technology include the third generation (3G), the fourth generation (4G), and the fifth generation (5G).

"User input device" as used herein refers to a device for providing input by a user to a computing device. The input is not limited by modality and can encompass mechanical movement, sound, images, and the like. The input can be discrete and/or continuous. The input is also not limited by the number of degrees of freedom. The input can be direct or indirect. When input is provided on a position or a position change, e.g. to move a pointer on a screen, the input can be absolute or relative. A non-limiting list of examples of user input devices comprises a keyboard, a computer mouse, a touchpad, a touchscreen, a camera, a scanner, a joystick, a microphone, a light pen, a trackball, a projected keyboard, a game controller, a card reader, and the like.

"Mobile device" as used herein refers to any portable computing device. Examples of mobile devices include a smartphone, a smartwatch, a laptop computer, a tablet computer, other portable handheld devices, and the like.

In a first aspect, the present invention provides a collecting device for a security analysis of a computing system. The collecting device comprises a first communication means suitable for communicating with the computing system, a second communication means, which may be equal to or distinct from the first communication means, the second communication means suitable for communicating with a mobile device, and a non-transitory storage medium. The non-transitory storage medium comprises computer executable instructions intended for generating security analysis data. The collecting device is configured to, upon establishing communication with the computing system via the first communication means, load the computer executable instructions from the non-transitory storage medium to execute the computer executable instructions, gather security analysis data from the computing system, and send the security analysis data to a mobile device via the second communication means.

In a preferred embodiment, the first communication means is a wired communication means able to provide power to the collecting device upon establishing communication with the computing system. In an even more preferred embodiment, the first communication means is a Universal Serial Bus (USB) connector. This USB connector can be of any USB standard and of any USB format.

In a preferred embodiment, the second communication means is a wireless communication means. This is advantageous when the collecting device is attached to the computing device at a location which is difficult to reach. In an even more preferred embodiment, the second communication means is a Bluetooth communications module.

In a second aspect, the present invention provides a mobile device program product for a security analysis of a computing system. The mobile device program product comprises a plurality of mobile device executable instructions for execution on a mobile device. The mobile device comprises a processor for executing the mobile device executable instructions, a display, a user input device to select an option presented on the display, and a third communication means suitable for communicating with the second communication means of the collecting device according to the first aspect of the present invention. The mobile device program product comprises instructions to receive security analysis data from the collecting device via the third communication means, process the received security analysis data resulting in a first diagnosis, and present information related to the first diagnosis on the display of the mobile device.

In a preferred embodiment, the third communications means of the mobile device is a wireless communication means. In an even more preferred embodiment, the third communication means is a Bluetooth communications module.

In a third aspect, the present invention provides a method for a security analysis of a computing system. The method requires a collecting device and a mobile device. The method comprises the steps of:
- enabling communication between the collecting device and the computing system,
- gathering security analysis data about the computing system on the collecting device,
- enabling communication between the collecting device and the mobile device,
- transmitting the security analysis data from the collecting device to the mobile device,
- processing the security analysis data on the mobile device resulting in a first diagnosis, and
- presenting information related to the first diagnosis on the mobile device.

The security analysis data is an intermediate form of data composed of any information which can be retrieved on the computing system. The security analysis data is then subsequently processed to the first diagnosis. One of ordinary skill in the art will appreciate that the security analysis data may be any data in the spectrum between the information which can be directly retrieved on the computing system and the first diagnosis. The security analysis data may therefore comprise one or more of the following list:
- any raw data directly retrievable on the computing system,
- the first diagnosis, and
- a processed form of intermediary data, derived from information which can be retrieved on the computing system, and which requires further processing to obtain the first diagnosis.

In a preferred embodiment, the collecting device comprises a full scan operation mode and a fast scan operation mode. In the full scan operation mode, the security analysis data comprises raw data retrievable on the computing system and/or a processed form of intermediary data. In the fast scan operation mode, the security analysis data comprises the first diagnosis.

The present invention is advantageous for several reasons. The collecting device comprises computer executable instructions for generating security analysis data about the computing system and also gathers this data. During this operation, the mobile device does not need to be present near the collecting device or computing system. During this operation, the mobile device should also not be in communication with the collecting device. Resources of the mobile device such as processor time or memory are not used during this operation. The mobile device can be carried away to another location and can, without restriction of the mentioned resources, be used for other functionalities such as searching for information on the internet or making a phone call, for example. Only when the gathered data is transmitted from the collecting device to the mobile device for processing, the mobile device should be in communication with the collecting device to enable the transmission. Subsequently, during processing of the security analysis data resulting in the first diagnosis, the mobile device can again be distanced from the collecting device or computing system.

Collecting devices according to preferred embodiments of the first aspect of the present invention, which comprise a USB connector and a Bluetooth communications module, are known in the art as dongles. In what follows, we refer to the collecting device as a dongle, the first communication means as a USB connector, the second communication means as a Bluetooth communication module, and the third communication means as a Bluetooth communication module. However, it should be noted that these terms are only used to indicate a preferred embodiment of the present invention, and should not be interpreted as limiting. In what follows, a dongle may refer to any collecting device according to the first aspect of the present invention, USB connector and/or USB port may refer to any communication means suitable for communication between the computing system and the collecting device, and Bluetooth communication module may refer to any communication means suitable for communication between the collecting device and the mobile device.

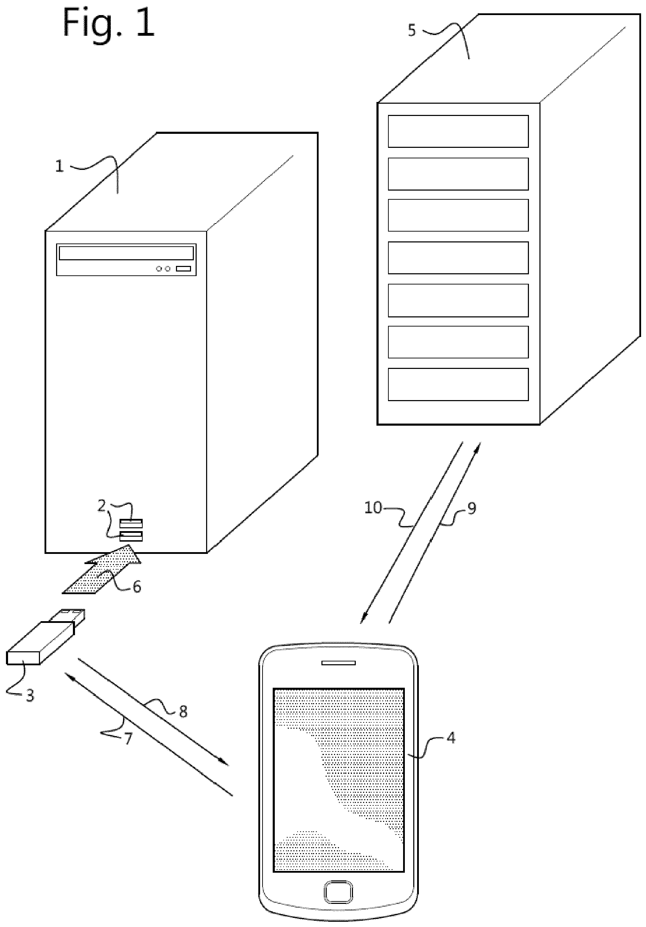

Figure 1 shows a schematic overview of the devices (1, 3, 4, 5) and wireless communication channels (7, 8, 9, 10) which can be used in a preferred embodiment of the present invention. A security analysis of a computing system (1) comprising one or more USB ports (2) is desired. To this end, a dongle (3) is provided. The dongle (3) comprises a USB connector for connection (6) in a USB port (2) of the computing system (1). Upon connection, the dongle (3) receives power from the computing system (1). The dongle (3) further comprises a Bluetooth communications module for communicating (7, 8) with a mobile device (4). The dongle (3) also comprises a non-transitory storage medium comprising computer executable instructions for generating security analysis data about the computing system (1). After loading and executing the computer executable instructions, the security analysis data is gathered on the dongle (3) and transmitted (8) to the mobile device (4) via the Bluetooth communications module of the dongle (3).

The mobile device (4) may comprise a non-transitory storage medium for storing a mobile device program product. The mobile device program product comprises a plurality of mobile device executable instructions. The mobile device (4) further comprises a processor suitable for executing the mobile device executable instructions, a display, a user input device to select an option presented on the display, and a Bluetooth communications module. The mobile device program product comprises instructions to receive (8) the security analysis data from the dongle (3) via the Bluetooth communications module of the mobile device (4), process the received security analysis data resulting in a first diagnosis, and present information related to the first diagnosis on the display of the mobile device (4).

The dongle (3) comprises computer executable instructions for generating security analysis data about the computing system (1) and also gathers this data. During this operation, the mobile device (4) does not need to be present near the dongle (3) or the computing system (1). During this operation, the mobile device (4) should also not be in communication (7, 8) with the dongle. Resources of the mobile device (4) such as processor capability or memory are not used during this operation. The mobile device (4) can be carried away to another location and can, without restriction of the mentioned resources, be used for other functionalities such as searching for information on the internet or making a phone call, for example. Only when the gathered security analysis data is transmitted (8) from the dongle (3) to the mobile device (4) for processing, the mobile device (4) should be present near the dongle (3) to enable the transmission. Subsequently, during processing of the security analysis data resulting in the first diagnosis, the mobile device (4) can again be distanced from the dongle (3) or the computing system (1).

In an embodiment of the present invention, the mobile device program product further comprises mobile device executable instructions for presenting a starting option on the display of the mobile device (4). Upon selection of the starting option with the user input device of the mobile device (4), a starting signal is transmitted (7) from the mobile device (4) to the dongle (3). The reception of the starting signal with the Bluetooth communication module of the dongle (3) then triggers the loading of computer executable instructions from the non-transitory storage medium of the dongle (3) and their execution for obtaining the security analysis data.

In a preferred embodiment of the present invention, the dongle (3) further comprises a processor, and the computer executable instructions are executed on the processor of the dongle (3) in order to emulate one or more user input devices for obtaining the desired security analysis data. In an alternative embodiment of the present invention, the computing system (1) comprises a processor and the computer executable instructions are loaded from the non-transitory storage medium of the dongle (3) and executed by the processor of the computing system (1). In yet another embodiment of the present invention, the dongle (3) comprises a first processor and the computing system (1) comprises a second processor, and a part of the computer executable instructions are executed by the first processor and a part of the computer executable instructions are executed by the second processor.

In a preferred embodiment of the present invention, the mobile device (4) further comprises a Wi-Fi module and/or a wireless mobile telecommunications technology module suitable for communicating (9, 10) with a remote server (5). Furthermore, the mobile device program product comprises in this embodiment instructions to send (9) the security analysis data from the mobile device (4) to the remote server (5). On the remote server (5), the security analysis data is then processed resulting in a second diagnosis. Subsequently, the second diagnosis is sent (10) from the remote server (5) to the mobile device (4). The mobile device program product comprises instructions to receive the second diagnosis. It also comprises instructions to present information related to the second diagnosis on the display of the mobile device (4) upon reception.

If the processing of the security analysis data is rather involved and requires a large amount of processing time, it can be advantageous to perform this processing on a better suited device such as a remote server (5). This remote server (5) can, for example, also comprise a database comprising a large amount of information for performing a more detailed security analysis, the large amount of information for performing a more detailed security analysis not suitable for storage on the non-transitory storage medium of the mobile device (4).

In a preferred embodiment of the present invention, the mobile device program product further comprises instructions for selecting one or more redress options from a redress option list based on the first and/or second diagnosis. The redress option list may include an update option for performing a software update on the computing system. The redress option list may also include a second opinion option if only a first diagnosis has been formed. The redress option list may further include a transmission option for sending redress information related to the security analysis data, which may fully or partially comprise the security analysis data, to a third-party service. The third-party service may be able to provide a human interpretation of the redress information. The third-party service may also be able to provide a third diagnosis based on a computer-implemented method for processing the redress information. The redress option list may further include a contact option for contacting a specialist service. The contact may be established via telephone. The contact may also be established by autofill and submission of an online form of the specialist service by the mobile device program product. Based on the first and/or second diagnosis, a stop option may also be presented, for example if no security breach of the computing system was detected. The mobile device program product may also comprise instructions to present the selected redress options on the display of the mobile device (4) as well as instructions to trigger a presented redress option upon selection of the presented option with the user input device of the mobile device (4).

Most often, users requiring a security analysis of their computing system are not only unaware of possible threats, but also of means of redress to fix these possible threats. It may therefore be advantageous to suggest means of redress to the user when a threat is detected. This may save time and costs for the user to obtain a suitable means of redress.

In a preferred embodiment, the dongle (3) is configured to store the gathered security analysis data on its non-transitory storage medium, to fully or partially load the security analysis data upon reception of a transmission request from the mobile device (4), and to send the loaded full or partial security analysis data to the mobile device (4).

This is advantageous as it can enable performing the security analysis during multiple separate executions of the computer executable instructions. It is further advantageous because the security analysis data will also be available after, for example, an unexpected power cut, or when the mobile device has been distanced from the dongle (3) or the computing system (1) for a prolonged period and the computing system was rebooted. It can also be advantageous to enable sending several pieces of partial security analysis data at distinct times, for example upon request of a specific piece by the mobile device program product on the mobile device (4). This request can be triggered by the mobile device program product itself, or by the remote server (5), for example in generating the second diagnosis. Sending only the relevant pieces of the security analysis data may result in less transmitted data overall, limiting costs and time to obtain the first and/or second diagnosis.

In a preferred embodiment, the dongle (3) is able to determine a hardware and operating system specification of the computing system (1), and to send (8) the determined hardware and operating system specification to the mobile device (4). The determined hardware and operating system specification can be part of the security analysis data. It can also be transmitted separately from the security analysis data.

This is advantageous because a hardware and operating system specification may include important information for performing a security analysis. It may also be important to assess whether the non-transitory storage medium of the dongle (3) comprises computer executable instructions suitable for the computing system (1) under investigation. It may also be important to suggest and provide adequate software updates for the computing system via the redress options.

In a preferred embodiment of the present invention, the dongle (3) may be able to receive updated computer executable instructions from the mobile device (4) and to store the updated computer executable instructions on the non-transitory storage medium. The mobile device program product then comprises instructions to send (7) the updated computer executable instructions from the mobile device (4) to the dongle (3) via their respective Bluetooth communication modules. The mobile device program product may further include instructions to download the updated computer executable instructions from a second remote server. The mobile device program product may also obtain (10) the updated computer executable instructions from the remote server (5) suitable for generating the second diagnosis.

This is advantageous, because it allows an update of the computer executable instructions on the dongle (3). This may be required if the instructions are outdated. This may also be required if the old computer executable instructions are not suitable for a hardware and/or operating system specification of the computing system (1) under investigation. This may further be required if during processing of the security analysis data on the remote server (5) further analysis is desired and the old computer executable instructions do not comprise the required instructions for the further analysis.

The invention is further described by the following non-limiting examples which further illustrate the invention, and are not intended to, nor should they be interpreted to, limit the scope of the invention.

### EXAMPLES

### Example 1

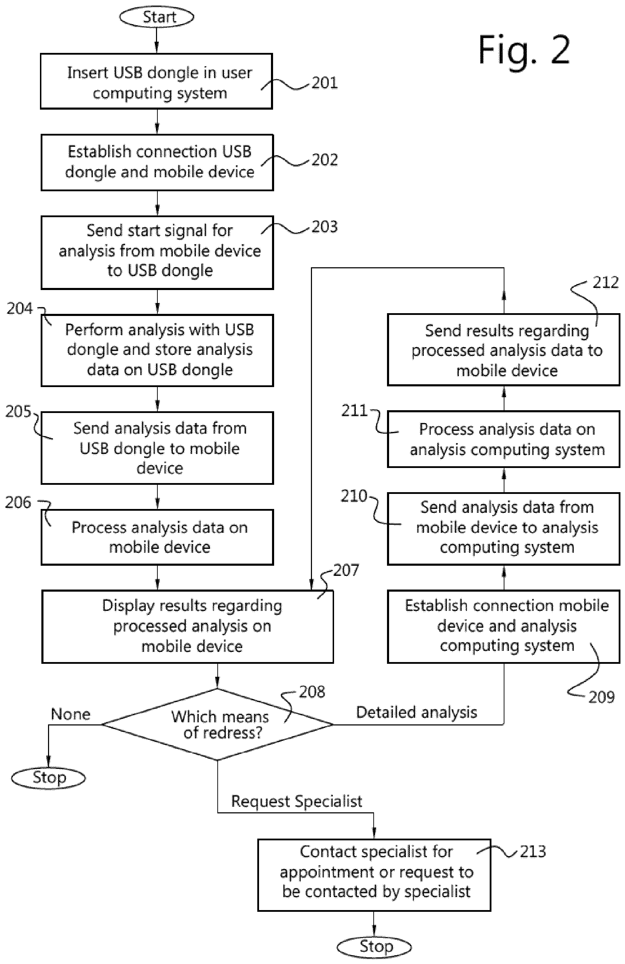

A user of a computer suspects a security breach. He requests a dongle according to the present invention from a service company, and downloads the associated application, i.e. the associated mobile device program product according to the present invention, on his smartphone. Figure 2 shows a block diagram of the steps for performing a security analysis of the computer.

The user inserts the USB connector of the dongle in a USB port of his computer, the user computing system (201). The dongle receives power from the user computing system and its Bluetooth communications module can then be made visible to other devices. The user opens the application and searches for a dongle associated to the application. The dongle is found and the user establishes communication between his smartphone and the dongle (202). The user further selects the start option for a full scan on the touchscreen of his smartphone which triggers the sending of a start signal from the mobile device to the dongle (203). The computer executable instructions are loaded from the non-transitory storage medium of the dongle, executed on the processor of the dongle which emulates one or more user input devices in order to retrieve the desired security analysis data, and the security analysis data is stored on the non-transitory storage medium of the dongle (204). During step (204), the user gets out of his office to make a phone call with his smartphone. A while later, the user returns to the computing system, detects the dongle, and selects the option to transmit the security analysis data from the dongle to the mobile device (205). The security analysis data is processed by the application resulting in a first diagnosis regarding security breaches (206). Information related to the first diagnosis is presented on the touchscreen of the smartphone (207). This information indicates that a security breach is likely. A second diagnosis is proposed (208). The user selects the corresponding option on the touchscreen of his smartphone, and the mobile device establishes communication with an analysis computing system (209), i.e. the remote server (5), via Wi-Fi. The security analysis data is sent from the smartphone to the analysis computing system (210), where it is processed resulting in a second diagnosis (211). This second diagnosis is sent to the mobile device (212) and presented on the touchscreen of the smartphone (207). A security breach has been detected. The application presents an option to call a specialist (208). The user selects this option, a telephone call to the specialist is triggered (213), and the user makes an appointment to get his computing system fixed.

### Example 2

A dongle (collecting device), such as, for example, the one described in the first example, may be configured for working in a full scan operation mode or a fast scan operation mode. The application (mobile device program product) may then comprise instructions for presenting on the screen of the mobile device information for selecting one of the two operation modes. The full scan operation mode may require the reception of a key from the provider of the dongle and/or the acceptance by the user of an agreement and/or the payment of a fee by the user to the provider of the dongle.

In the fast scan operation mode, the security analysis data comprises the first diagnosis. The first diagnosis preferably comprises a threat level indication. This may be a discrete threat level indication such as 'yes', 'maybe', or 'no' or a continuous threat level indication such as a percentage value. Preferably, no security analysis data is stored on the dongle in the fast scan operation mode. Preferably, said threat level indication is the security analysis data which is communicated from the dongle to the mobile device.

An example of an embodiment of a full scan operation mode may be found in the block diagram shown in Figure 2 and described in the abovementioned first example.

## Claims

1. Collecting device for a security analysis of a computing system, the collecting device comprising:
- a first communication means suitable for communicating with the computing system,
- a second communication means, which may be equal to or distinct from the first communication means, suitable for communicating with a mobile device,
- a non-transitory storage medium comprising computer executable instructions for generating security analysis data,
whereby the collecting device is configured to, upon establishing communication with the computing system via the first communication means:
- load the computer executable instructions from the non-transitory storage medium to execute the computer executable instructions,
- gather security analysis data from the computing system, and
- send the security analysis data to the mobile device via the second communication means.

2. Collecting device according to claim 1, whereby the first communication means is a Universal Serial Bus connector and whereby the second communication means is a Bluetooth communications module.

3. Collecting device according to any one of claims 1 and 2, whereby the collecting device comprises a processor and whereby the collecting device is configured to emulate one or more user input devices for gathering said security analysis data.

4. Collecting device for a security analysis of a computing system according to any one of claims 1 to 3, whereby the collecting device is further configured to, upon establishing communication with the computing system via the first communication means:
- store the gathered security analysis data on the non-transitory storage medium,
- receive a transmission request from the mobile device via the second communication means,
- fully or partially load the stored security analysis data from the non-transitory storage medium, and
- send the loaded full or partial security analysis data to the mobile device via the second communication means.

5. Collecting device for a security analysis of a computing system according to any one of claims 1 to 4, whereby the collecting device is further configured to, upon establishing communication with the computing system via the first communication means:
- determine a hardware and operating system specification of the computing system, and
- send the determined hardware and operating system specification to the mobile device via the second communication means.

6. Collecting device for a security analysis of a computing system according to any one of claims 1 to 5, whereby the collecting device is further configured to, upon establishing communication with the computing system via the first communication means:
- receive updated computer executable instructions from the mobile device via the second communication means, and
- store the updated computer executable instructions on the non-transitory storage medium.

7. Mobile device program product for a security analysis of a computing system, the mobile device program product comprising a plurality of mobile device executable instructions for execution on a mobile device, the mobile device comprising a processor for executing the mobile device executable instructions, a display, a user input device to select an option presented on the display, and a third communication means suitable for communicating with the second communication means of a collecting device according to any one of claims 1 to 6, whereby the mobile device program product comprises instructions to:
- receive security analysis data from the collecting device via the third communication means,
- process the received security analysis data resulting in a first diagnosis, and
- present information related to the first diagnosis on the display of the mobile device.

8. Mobile device program product for a security analysis of a computing system according to claim 7, the mobile device further comprising a fourth communication means, preferably a Wi-Fi module and/or wireless mobile telecommunications technology module, the fourth communication means suitable for communicating with a remote server, the mobile device program product comprising instructions to:
- send the security analysis data from the mobile device to the remote server, the remote server processing the security analysis data resulting in a second diagnosis,
- receive the second diagnosis from the remote server, and
- present information related to the second diagnosis on the display of the mobile device.

9. Mobile device program product for a security analysis of a computing system according to any one of claims 7 and 8, the mobile device program product comprising instructions to:
- select one or more redress options from a redress option list based on one or more of the diagnoses,
- present the selected redress options on the display of the mobile device,
- if the redress option list comprises a transmission option for transmitting redress information related to the security analysis data to a third-party service, transmit the redress information to the third-party service, and
- if the redress option list comprises a contact option for contacting a specialist service, contact the specialist service.

10. Mobile device program product for a security analysis of a computing system according to any one of claims 7 to 9, the mobile device program product comprising instructions to send updated computer executable instructions intended for the collecting device to the collecting device via the third communication means.

11. Method for a security analysis of a computing system, the method comprising the steps of:
- enabling communication between a first device and the computing system,
- gathering security analysis data about the computing system on the first device,
- enabling communication between the first device and a second device,
- transmitting the security analysis data from the first device to the second device,
- processing the security analysis data on the second device resulting in a first diagnosis, and
- presenting information related to the first diagnosis on the second device.

12. Method for a security analysis of a computing system according to claim 11, the method comprising the steps of:
- enabling communication between the second device and a second system,
- sending the security analysis data from the second device to the second system,
- processing the security analysis data on the second system resulting in a second diagnosis,
- sending the second diagnosis from the second system to the second device, and
- presenting information related to the second diagnosis on the second device.

13. Method for a security analysis of a computing system according to any one of claims 11 and 12, the method comprising the steps of:
- presenting one or more selectable redress options based on one or more of the diagnoses on the second device,
- if the one or more selectable redress options comprise a transmission option for transmitting redress information related to the security analysis data to a third-party service, transmitting the redress information to the third-party service upon selection of the transmission option, and
- if the one or more selectable redress options comprise a contact option for contacting a specialist service, contacting the specialist service upon selection of the contact option.

14. Method for a security analysis of a computing system according to any one of claims 11 to 13, the method comprising the steps of:
- gathering a hardware and operating system specification of the computing system on the first device, and
- sending the gathered hardware and operating system specification from the first device to the second device.

15. Method for a security analysis of a computing system according to any one of claims 11 to 14, the method comprising the steps of:
- sending instructions for gathering security analysis data about the computing system from the second device to the first device.
